# EUROPEAN PATENT APPLICATION

(11) **EP 4 610 935 A1**
(43) Date of publication of application: **03.09.2025**
(21) Application number: 25159132.7
(22) Date of filing: 20.02.2025
(51) Int. Cl.: G06T 19/20

(54) **SYSTEMS AND METHODS FOR ENHANCED IMAGE GENERATION**

(30) Priority: 27.02.2024 US 202463558302 P
(71) Applicant: Sony Group Corporation, Tokyo 108-0075 (JP)
(72) Inventor: NIJHAWAN, Siddharth Sagar, Tokyo, 108-0075 (JP); YASHIMA, Takuya, Tokyo, 108-0075 (JP); KOJIMA, Tamaki, Tokyo, 108-0075 (JP)
(74) Representative: 2SPL Patentanwälte PartG mbB

(57) **Abstract**

An image generation system may receive a source image including a source object having appearance features. The appearance features may include unique visual characteristics indicative of a visual identity of the source object. The image generation system may receive a target image including a target object having a target motion. The image generation system may generate, based on the appearance features and the target motion, a three-dimensional (3D) flow field indicative of spatial transformations between the appearance features and the target motion. The image generation system may warp, using the 3D flow field, the appearance features to generate a warped image including a warped object having warped appearance features that mimic the target motion and preserve the visual identity of the source object. The image generation system may provide the warped image as an output image.

## Description

### BACKGROUND

Generative artificial intelligence (AI) techniques are widely employed in image synthesis to create realistic and dynamic images. These techniques allow for the transfer of motion or pose from one image to another image. Accordingly, these techniques are used in various applications including face reenactment, animation, and video synthesis applications.

### SUMMARY

Some implementations described herein relate to a method for generating an image, the method comprising: receiving a source image including a source object having appearance features, wherein the appearance features include unique visual characteristics indicative of a visual identity of the source object; receiving a target image including a target object having a target motion; generating, based on the appearance features and the target motion, a three-dimensional (3D) flow field indicative of spatial transformations between the appearance features and the target motion; warping, using the 3D flow field, the appearance features to generate a warped image including a warped object having warped appearance features that mimic the target motion and preserve the visual identity of the source object; and providing the warped image as an output image.

Some implementations described herein relate to an image generation system, comprising: one or more memories; and one or more processors, communicably coupled to the one or more memories, configured to: receive a source image including a source object having appearance features, wherein the appearance features include unique visual characteristics indicative of a visual identity of the source object; receive a target image including a target object having a target motion; generate, based on the appearance features and the target motion, a three-dimensional (3D) flow field indicative of spatial transformations between the appearance features and the target motion; warp, using the 3D flow field, the appearance features to generate a warped image including a warped object having warped appearance features that mimic the target motion and preserve the visual identity of the source object; and provide the warped image as an output image.

Some implementations described herein relate to a non-transitory computer-readable medium storing a set of instructions, the set of instructions comprising: one or more instructions that, when executed by one or more processors of an image generation system, cause the image generation system to: receive a source image including a source object having appearance features, wherein the appearance features include unique visual characteristics indicative of a visual identity of the source object; receive a target image including a target object having a target motion; generate, based on the appearance features and the target motion, a three-dimensional (3D) flow field indicative of spatial transformations between the appearance features and the target motion; warp, using the 3D flow field, the appearance features to generate a warped image including a warped object having warped appearance features that mimic the target motion and preserve the visual identity of the source object; and provide the warped image as an output image.

### BRIEF DESCRIPTION OF THE DRAWINGS

Figs. 1A-1D are diagrams of an example associated with enhanced image generation.
Fig. 2 is a diagram of an example environment in which systems and/or methods described herein may be implemented.
Fig. 3 is a diagram of example components of a device associated with enhanced image generation.
Fig. 4 is a flowchart of an example process associated with enhanced image generation.

### DETAILED DESCRIPTION

The following detailed description of example implementations refers to the accompanying drawings. The same reference numbers in different drawings may identify the same or similar elements.

Generative artificial intelligence (AI) techniques may be used for image generation applications, such as facial reenactment applications. Typical generative AI techniques used for facial reenactment applications include image warping-based techniques, style-based generative adversarial network (GAN) techniques, and volumetric three-dimensional (3D) human head reconstruction techniques.

Typical image warping-based techniques focus on transferring facial motion through spatial deformations or flow fields, offering control over facial feature manipulation. However, these techniques often struggle when there are differences between source and target expressions and face challenges with two-dimensional (2D) pixel-space warping, leading to unrealistic results, particularly in cases of pose variation.

Typical style-based GAN techniques, which map source images to a latent space of pre-trained GAN models, fail to capture fine-grained details, such as pupil movement. Additionally, the typical style-based GAN techniques suffer from rendering artifacts, such as hair texture sticking to a background and loss of background information in synthesized images.

Typical volumetric 3D human head reconstruction techniques, such as those using neural radiance fields (NeRFs) for multi-view consistency, face difficulties in capturing dynamic head and torso movements, often resulting in rigid, unnatural synthesized images.

Some implementations described herein provide enhanced image generation. For example, an image generation system may implement an image generation model for performing enhanced facial expression transfer (e.g., one-shot face reenactment) with robustness to head pose variations by integrating both 2D and 3D methodologies, as described in more detail elsewhere herein. The image generation model may estimate 3D flow fields (e.g., dense 3D facial flow fields) and may perform warping operations on 3D feature volumes extracted from 2D images. The warped 3D feature volumes may be converted to a 2D warped image that mimics the target motion while retaining a visual identity associated with the source image.

The image generation model may include components for motion estimation (e.g., 3D motion estimation), image warping (e.g., 3D image warping), and image refinement. For example, the image generation model may use an adaptive instance normalization (AdaIN) technique for feature modulation and smooth integration of the target motion and the identity characteristics and may use a U-shaped network (UNet)-based architecture for image refinement and inpainting to remove artifacts and enhance finer details in the warped image, as described in more detail elsewhere herein. Additionally, the image generation model may employ a cyclic warp loss technique to regularize motion estimation, enhancing an accuracy of the facial expression transfer. This design ensures realistic rendering of fine facial details (e.g., eyes, lips, skin texture, among other examples) while preventing unwanted background motion, thus offering enhanced performance in challenging face reenactment tasks compared to typical image generation techniques.

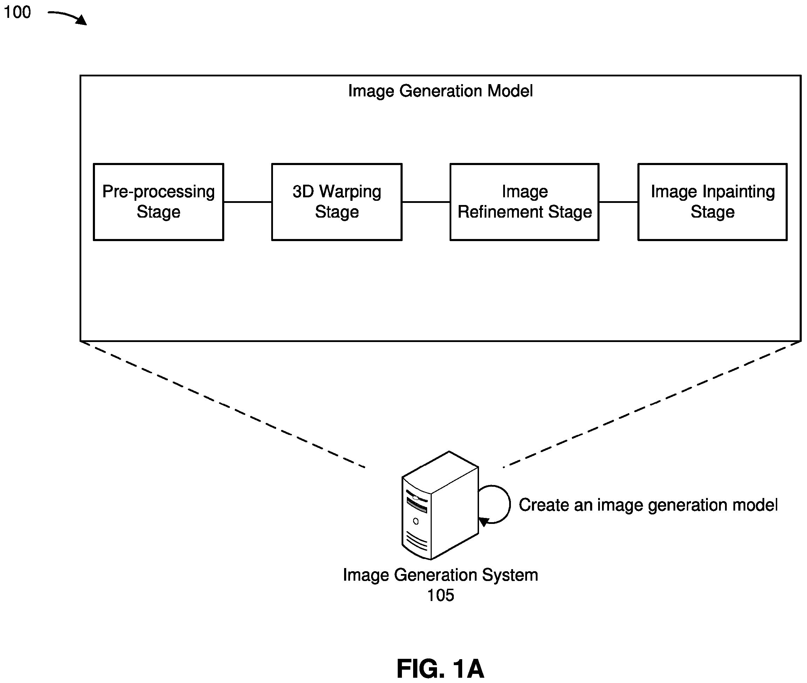

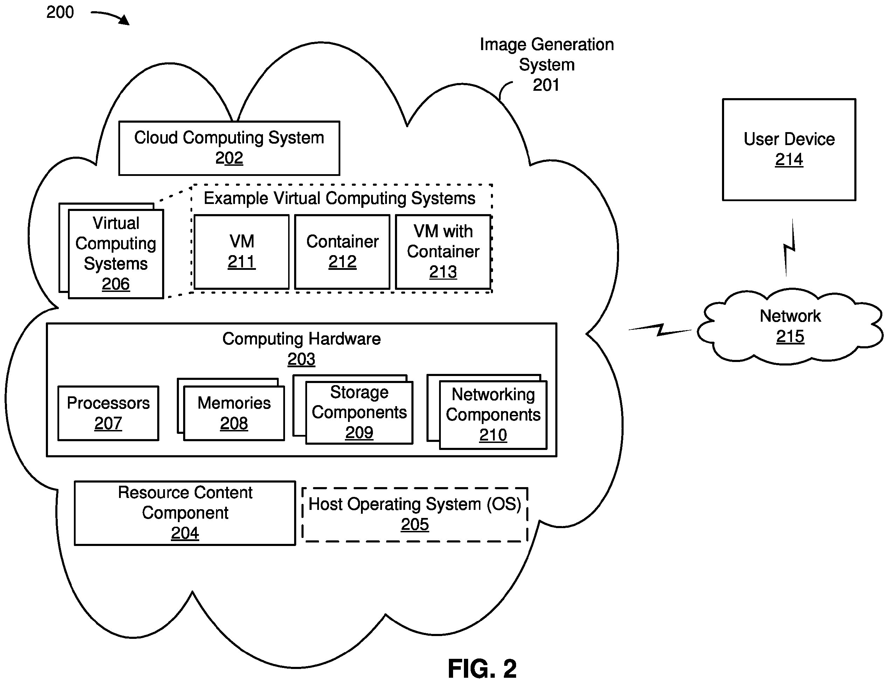

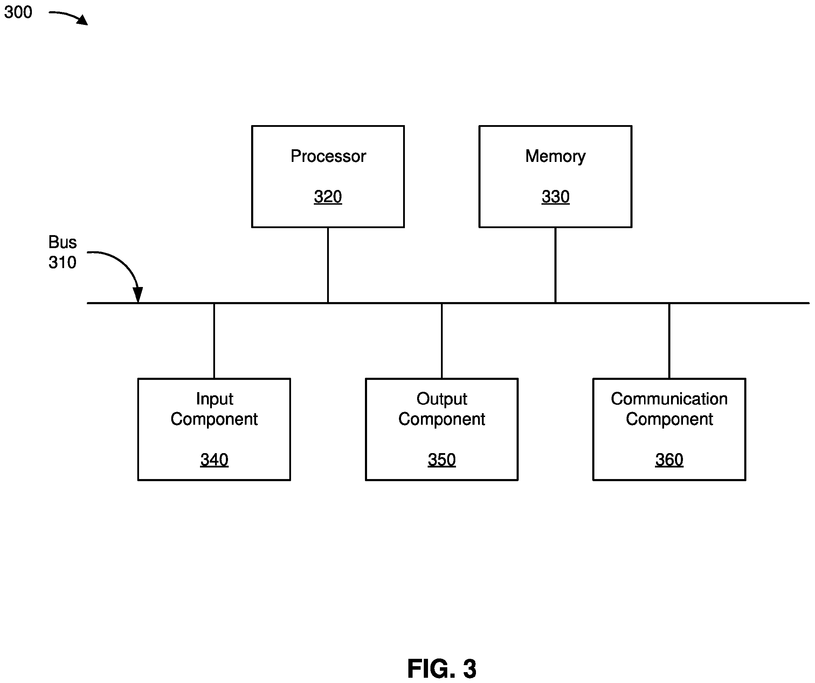

Figs. 1A-1D are diagrams of an example 100 associated with enhanced image generation. As shown in Figs. 1A-1D, the example 100 includes an image generation system 105 and a user device 110. These devices are described in more detail in connection with Figs. 2 and 3.

As shown in Fig. 1A, the image generation system 105 may create an image generation model (e.g., a neural network-based model, among other examples), such as by training the image generation model. In some implementations, the image generation model may include one or more networks (e.g., one or more neural network models) in a pre-processing stage, a 3D warping stage, an image refinement stage, and an image inpainting stage. After training, the image general model may receive a source image and a target image (e.g., of a target video) as inputs for processing.

In the pre-processing stage, the image generation model may separate a source foreground region (e.g., including a source face and a source torso) from a source background region of the source image, may estimate 3DMM parameters based on a target motion (e.g., a target pose and a target expression) extracted from the target image (e.g., which helps control facial expressions, and may generate a target motion vector based on the 3DMM parameters.

In the 3D warping stage, the image generation model may use the 3DMM parameters to compute 3D flow fields (e.g., dense 3D facial flow fields), warping a 3D appearance feature volume of the source foreground into the target motion. The image generation model may pass the warped features through a 3D feature decoder, transforming the warped features into a 2D warped image.

In the image refinement stage, the image generation model may leverage a modified UNet architecture, which may be referred to as a TransUNet architecture, to refine the warped image and render fine-grained facial details, while ensuring preservation of a visual identity of the source foreground.

In the image inpainting stage, the image generation model may project (or add) the refined foreground region back onto the source background region and inpaint any blank spaces resulting from face translation using a second pass of the TransUNet architecture to ensure the source background is realistically restored.

In some implementations, the image generation system may train the image generation model in a first phase and a second phase. In the first phase, the 3D warping network and the inpainting network may be pre-trained independently to ensure that the 3D warping network generates meaningful deformations and the inpainting network restores background details. Furthermore, in the first phase, the image generation model may be trained with source-target image pairs for supervised learning.

In the second phase, the image generation system may perform end-to-end training on the image generation model to optimize an entirety of the image generation model holistically. Furthermore, the image generation system may train the image generation model by regularizing motion estimation of the 3D warping network using a cyclic warp loss. This loss function ensures that the 3D warping network accurately estimates the target motion by enforcing a cyclic consistency (e.g., the 3D warping network generates a forward-warped image from the source image to the target image, and then warps the warped image back to the source image. The cyclic warp loss minimizes a difference between a synthesized output image and the source image, improving the motion estimation and ensuring precise expression transfer.

In this way, the image generation model may integrate both two-dimensional (2D) and three-dimensional (3D) methodologies, using a neural network architecture to estimate 3D flow fields (e.g., dense 3D facial flow fields) and perform warping operations on 3D feature volumes extracted from 2D images. Additionally, the image generation model may handle large pose variations and/or large expression variations while preserving identity characteristics, as described in more detail elsewhere herein.

Pose variations may refer to changes in orientations of poses associated with the source image and the target image (e.g., changes in orientations of the source face and the source torso in the source image relative to orientations of the target face and the target torso in the target image) and expression variations may refer to changes in expression features associated with the source image and the target image (e.g., changes in facial features of the source face relative to facial features of the target face in the target image). As an example, a large pose variation may refer to a difference between the pose associated with the source image and the pose associated with the target image of at least approximately thirty degrees (e.g., a thirty degree rotation of the source face relative to the target face). As another example, a large expression variation may refer to a substantial shift between the expression associated with the source image and the expression associated with the target image, such as a transition from a neutral expression to an exaggerated smile, frown, or a wide-eyed surprise (e.g., where multiple facial muscles are activated in a noticeably different manner).

Accordingly, and in some implementations, the image generation model may be used for enhanced one-shot face reenactment tasks. For example, the image generation model may generate output frames for an output face reenactment video where each frame mimics the target motion of the target images while preserving the visual identity associated with the source image. To perform a face reenactment task, the image generation model may receive a source image (e.g., capturing identity characteristics) and a target video (e.g., with a sequence of target frames showing varying poses and expressions of a target face).

For each target frame in the target video, the image generation model may process a corresponding target frame and source image, warping source facial features to match the target motion while retaining the visual identity of the source (e.g. the image generation model may apply the 3D flow fields to align the facial features of the source image with the target motion of the corresponding target image). The image generation may perform refinement operations on the warped image to generate a final output image. By repeating this process on a frame-by-frame basis, the image generation model may generate a sequence of output frames that reconstruct the source face reenactment based on the target video. When stitched together, these output frames form a continuous face reenactment video, accurately reflecting the target motions while maintaining the visual identity associated with the source image.

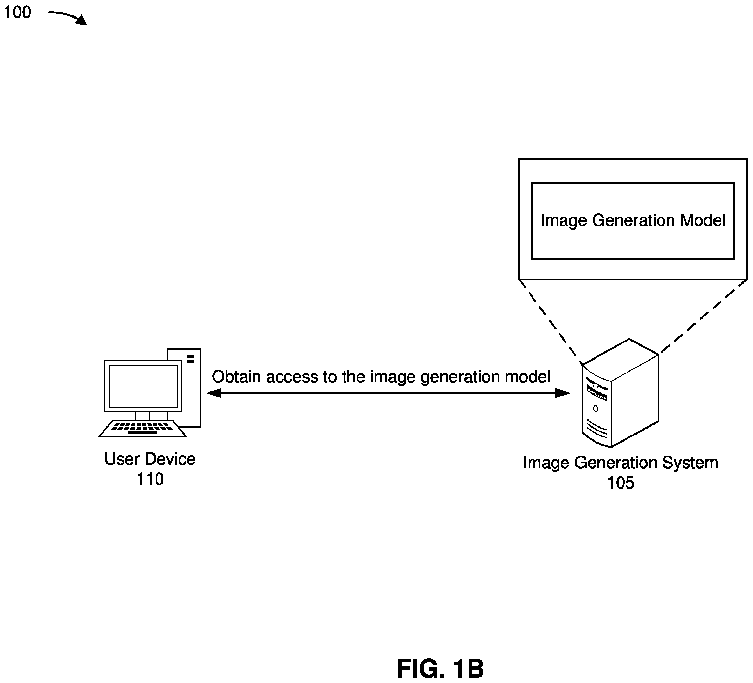

As shown in Fig. 1B, the image generation system 105 may provide, and the user device 110 may receive, access to the image generation model. In some implementations, the image generation system 105 may host the image generation model, and a user may utilize the user device 110 to access a platform or service where the image generation model is available for download (e.g., a website, an application marketplace, and/or a dedicated image generation model repository, among other examples).

As an example, a user of the user device 110 may navigate to the platform or service and select the image generation model for download (e.g., the user may click a download button or follow installation instructions provided by the service, among other examples). After downloading the image generation model, the user may cause the image generation model to be deployed on the user device 110 (e.g., based model parameters of the image generation model). After installation, the user may access the image generation model (e.g., via a user interface of the user device 110 that is part of an application or software tool designed in association with the image generation model, among other examples).

In some implementations, the image generation system 105 may host the image generation model, and the user may utilize the user device 110 to access a platform or service where the image generation model is available for utilization (e.g., via an application programming interface (API) endpoint, a web service, or a dedicated image generation model hosting platform, among other examples). As an example, a user of the user device 110 may navigate to the platform or service and interact with the image generation model (e.g., by sending requests through API calls or accessing a web interface, among other examples). In this way, the user may utilize the image generation model without downloading the image generation model directly. The server-side hosted image generation model may handle processing and generation tasks, providing outputs based on user inputs (e.g., source images, target images, and/or target videos provided, and/or selected, by the user), as described in more detail elsewhere herein.

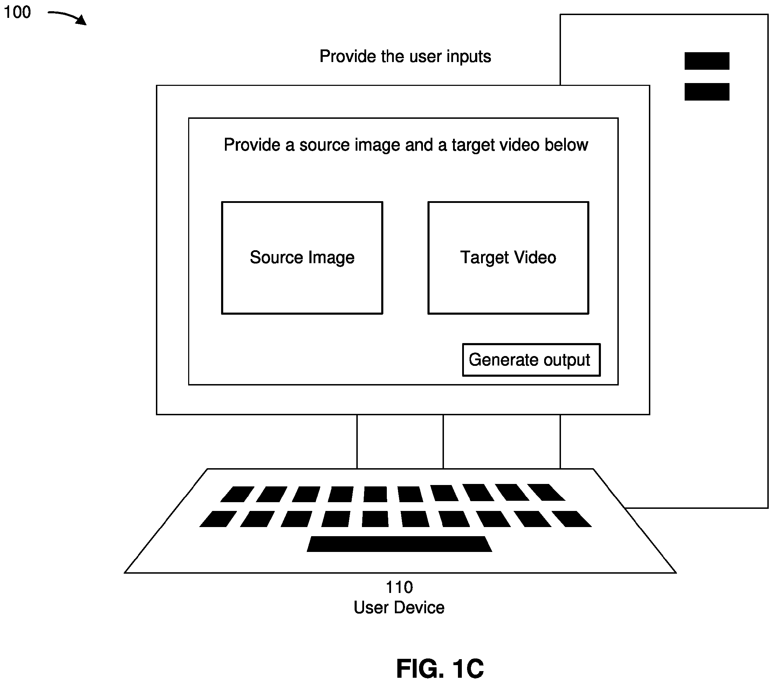

As shown in Fig. 1C, the user may provide (e.g., via the user device 110), the user inputs to the image generation model. As an example, the user may provide a source image and a target video as the user inputs to the image generation model. The source image may include a source foreground region and a source background region. The source foreground region may include a source face and a source torso (e.g., of a source individual) having appearance features. The appearance features may be unique visual characteristics indicative of a visual identity of the source face and the source torso.

In some implementations, the appearance features may include identity features, pose features, and/or expression features associated with the source face and/or the source torso. The identity features may represent a facial structure (e.g., a shape and/or contours of the source face), a skin texture (e.g., pores, wrinkles, and/or freckles on the source face), and/or relative facial positioning (e.g., relative positioning of eyes, a nose, and/or a mouth) associated with the source face. Additionally, the identity features may represent a shape and/or a posture (e.g., contours of shoulders, a chest, and/or a waist) and/or a clothing texture and color (e.g., fabric and/or patterns of clothing worn) associated with the source torso.

The pose features may define an overall spatial orientation of the source face and the source torso (e.g., in relation to a camera or environment, among other examples). Accordingly, for example, the pose features may represent an orientation or a positioning of the source face and/or the source torso, such as a yaw (e.g., left or right head turns), a pitch (e.g., upward or downward tilt of the head), and/or a roll (e.g., side tilts of the head), as well as a posture of the source torso (e.g., indicative of whether shoulders of the source torso are slouched or upright), among other examples.

The expression features may include dynamic characteristics that represent an emotional state or facial movements of the source face, such as mouth movements (e.g., smiling or frowning), eyebrow movements (e.g., raised or furrowed), eye states (e.g., open, closed, or squinting), and/or cheek movements that may indicate expressions (e.g., laughter or sadness). Accordingly, the expression features may capture changes in appearance related to facial expressions or other dynamic motions.

The target video may include a set of target frames displaying a target face and a target torso (e.g., of a target individual) with target motions (e.g., target poses and expressions of the target face and the target torso). The target face and the target torso may have appearance features. The appearance features may be unique visual characteristics indicative of a visual identity associated with the target face and the target torso. The target motions may be associated with orientations and/or positionings of the target face and the target torso. For example, the target face may exhibit a facial expression (e.g., smiling or frowning) and the target torso may exhibit a posture (e.g., slouching or leaning). The image generation model may process the source image and the set of target frames to generate (or synthesize) output images that preserve the appearance characteristics of the source face and the source torso while incorporating the target motions of the set of target frames on a frame-by-frame basis, as described in more detail elsewhere herein.

In some implementations, the source image may be associated with a source individual and the target face displayed in the target video may be associated with a target individual. The source image may include a source foreground region and a source background region. The source foreground region may include a source face and a source torso having appearance features. The appearance features may be unique visual characteristics indicative of a visual identity of the source face and the source torso. For example, the appearance features may include identity features, pose features, and/or expression features associated with the source face and/or the source torso.

The identity features may represent a facial structure (e.g., a shape and/or contours of the source face), a skin texture (e.g., pores, wrinkles, and/or freckles on the source face), and/or relative facial positioning (e.g., relative positioning of eyes, a nose, and/or a mouth) associated with the source face. Additionally, the identity features may represent a shape and/or a posture (e.g., contours of shoulders, a chest, and/or a waist) and/or a clothing texture and color (e.g., fabric and/or patterns of clothing worn) associated with the source torso.

The pose features may define an overall spatial orientation of the source face and the source torso in relation to a camera or environment. Accordingly, for example, the pose features may represent an orientation or a positioning of the source face and/or the source torso, such as a yaw (e.g., left or right head turns), a pitch (e.g., upward or downward tilt of the head), and/or a roll (e.g., side tilts of the head), as well as a posture of the source torso (e.g., indicative of whether shoulders of the source torso are slouched or upright), among other examples.

The expression features may include dynamic characteristics that represent an emotional state or facial movements of the source face, such as mouth movements (e.g., smiling or frowning), eyebrow movements (e.g., raised or furrowed), eye states (e.g., open, closed, or squinting), and/or cheek movements that may indicate expressions (e.g., laughter or sadness). Accordingly, the expression features may capture changes in appearance related to facial expressions or other dynamic motions.

The target video may include a set of target frames displaying a target face and a target torso with target motions (e.g., target poses and expressions of the target face and the target torso). The target motions may be associated with orientations and/or positionings of the target face and the target torso. For example, the target face may exhibit a facial expression (e.g., smiling or frowning) and the target torso may exhibit a posture (e.g., slouching or leaning).

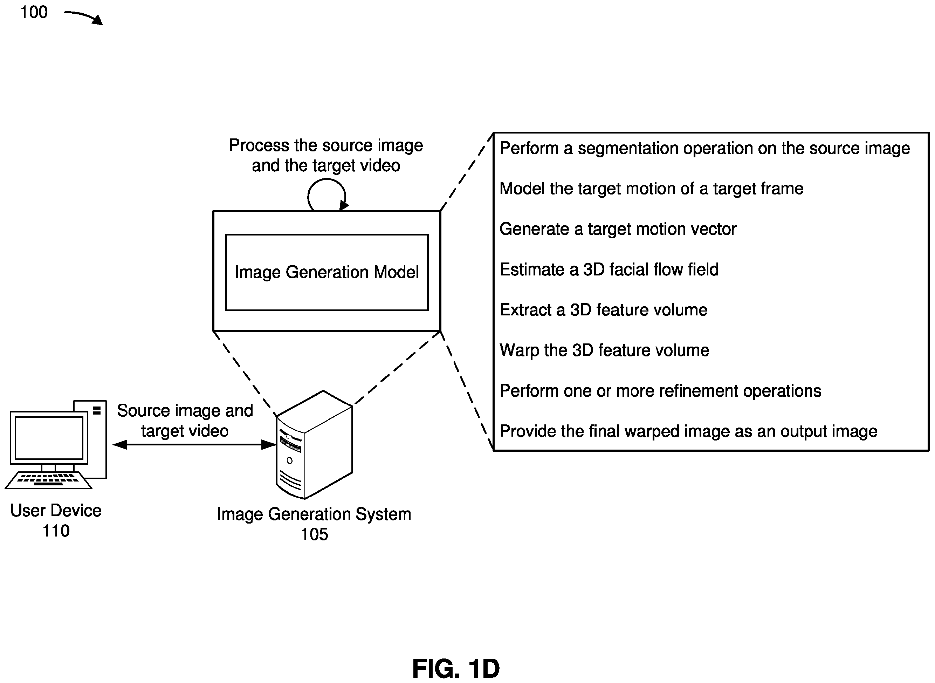

As shown in Fig. 1D, the image generation model may process the source image and the target video. As an example, the image generation model may process the set of target frames to generate (or synthesize) output images that preserve the appearance characteristics of the source face and the source torso while incorporating the target motions of the set of target frames on a frame-by-frame basis, as described in more detail elsewhere herein.

As further shown in Fig. 1D, the image generation model may perform a segmentation operation on the source image. To perform the segmentation operation on the source image, the image generation model may separate the source foreground region from the source background region using one or more AI techniques. As an example, the image generation model may use a matting technique (e.g., a computer vision and image processing technique used to estimate opacity values of a foreground object for separating it from a background in an image or video), such as a robust video matting (RVM) technique, to separate the source foreground region from the source background region, among other examples. In this way, the image generation model may process the source foreground region separately from the source background region, as described in more detail elsewhere herein.

As further shown in Fig. 1D, the image generation model may model the target motion of a target frame (e.g., included in the set of target frames). To model the target motion of the target frame, the image generation model may use a parametric face model, such as a 3DMM. A parametric face model may be used to represent 3D facial geometry, texture, and/or motion through a set of coefficients controlling shape, expression, and pose. The shape may be defined by identity bases derived from principal components of 3D facial scans, while the expression bases capture deformations for dynamic facial movements. Pose parameters may include head rotation (e.g., yaw, pitch, roll) and translation in 3D space. The parametric face model may represent a face as a linear combination of the identity and expression bases, with coefficients encoding both static identity features and dynamic variations, such as expressions and/or movements.

In some implementations, the image generation model may use a 3DMM model to extract 3DMM parameters (and/or 3DMM coefficients) that represent a shape, expression, and/or a pose of the target face and the target torso. For image generation, the 3DMM parameters may provide a compact, interpretable representation that enables tasks, such as neural rendering, motion transfer, and/or expression synthesis. Extending the 3DMM parameters to include torso parameters further enhances realism by incorporating upper body pose and motion dynamics. Accordingly, for example, the 3DMM parameters (e.g., extracted by the image generation model) may include identity and expression bases, along with coefficients for head rotation (e.g., yaw, pitch, and roll), head translation, and/or facial movement, among other examples.

As further shown in Fig. 1D, the image generation model may generate a target motion vector. As an example, the image generation model may map the 3DMM parameters to a canonical latent space to generate a target motion vector representative of the target motion. The target motion vector accurately reflects the spatial transformations and motion dynamics of the target face and the target torso. The image generation model may use the target motion vector to guide the reenactment of the source face, as described in more detail elsewhere herein.

In some implementations, the image generation model may generate a target motion vector for a window of target frames included in the set of target frames. As an example, the image generation model may apply a series of one-dimensional (1D) convolutions and center crop operations to capture motion dynamics across consecutive target frames. The resulting target motion vector represents the spatial and temporal transformations of the target motion.

As further shown in Fig. 1D, the image generation model may estimate a 3D flow field (e.g., a dense 3D facial flow field). As an example, the image generation model may estimate, based on the source face, the source torso, and the target motion vector, a 3D flow field representative of deformations between the source face and the source torso and the target motion. In some implementations, the image generation model may compute a 3D flow field driven by the 3DMM parameters (and/or the 3DMM coefficients). This enhances an ability of the image generation model to expressively capture and transfer the target motion with a high level of accuracy and robustness, even in scenarios involving large variations.

In some implementations, and to compute the 3D flow field, the image generation model may process red green blue (RGB) channels of the source image to capture color information, enabling the image generation model to accurately represent hues, tones, and/or shading to enhance realism of the output images. The image generation model may estimate depth to determine a spatial structure of the source face and the source torso (e.g., including how different parts of the source face and/or the source torso are positioned relative to each other in a 3D space).

In some implementations, the image generation model may generate feature maps (e.g., channels) through 3D convolution layers, which capture both low-level details (e.g., edges and/or textures, among other examples) and high-level features (e.g., complex shapes and/or spatial relationships within the source image, among other examples). The feature maps represent various visual characteristics and provide a rich multi-dimensional representation of the source face and the source torso, ensuring that the visual identity of the source face and the source torso and the target motion are accurately modeled.

As further shown in Fig. 1D, the image generation model may extract a 3D feature volume (e.g., of the appearance features of the source face and the source torso). The 3D feature volume may represent information associated with the shape, texture, and/or spatial arrangement of various elements of the source face and the source torso, including geometric structure (e.g., facial contours, torso posture), skin texture, and/or the relative positioning of facial components, among other examples. The 3D feature volume enables the image generation model to preserve the visual identity of the source face and the source torso while modeling the source face and the source torso in three dimensions.

As further shown in Fig. 1D, the image generation model may warp the 3D feature volume (e.g., of the appearance features). As an example, the image generation model may warp, using the 3D flow field, the 3D feature volume to generate a warped image including a warped source foreground. The warped source foreground includes a warped face and a warped torso, with warped 3D appearance features that mimic the target motion and that preserve the visual identity of the source face and the source torso. In some implementations, the image generation model may inject the target motion into each convolutional layer of the image generation model using an adaptive instance normalization (AdaIN) technique. This ensures that the target motion is smoothly and uniformly integrated into the appearance features of the source face and the source torso, enabling accurate transfer of the target motions (e.g., the target poses and the target expressions) while maintaining the visual identity of the source face and the source torso in the generated warped image.

As further shown in Fig. 1D, the image generation model may perform one or more refinement operations (e.g., on the warped image). As an example, the image generation model may perform an image-to-image transfer operation where both the warped image and the source image are processed to generate a refined warped image including a refined warped foreground. The refined warped foreground includes a refined warped face and a refined warped torso. Accordingly, this refinement process may be used to restore, and/or improve, finer details such, as facial features (e.g., pupils, eyes, teeth, and lips), that may be distorted or lost during the warping process.

In some implementations, direct skip connections may be applied within the image generation model to preserve original textures and appearance of the source image during down-sampling stages. Additionally, the target motion vector may be injected (e.g., via an AdaIN technique) at each convolutional layer, enabling smooth blending of the target motion into the refined warped image while maintaining the visual identity of the source face and the source torso.

As another example, the image generation model may refine the refined warped image by generating a background with high-frequency details to enhance realism, to generate a final warped image. For example, the image generation model may project the refined foreground, which contains only the refined warped face and the refined warped torso, onto the source background region, which was separated during pre-processing. After this projection, blank spaces may appear because of translation or motion of the source face and the source torso. To address this, the image generation model may perform an inpainting operation to fill the blank spaces (e.g., by correlating neighboring pixel information), ensuring a smooth and consistent transition between the refined warped source foreground and the source background. This refinement step results generating the final warped image that not only accurately represents the source face, the source torso, and the target motion but also maintains a high-quality and realistic background.

As further shown in Fig. 1D, the image generation model may provide the final warped image as an output image. The output image may be an output frame of a set of output frames of a face reenactment video generated by the image generation where each output frame mimics the target motion of the target frames of the target video while preserving the visual identity of the source face and the source torso.

Accordingly, the image generation model may integrate both two-dimensional (2D) and three-dimensional (3D) methodologies to handle large pose and expression variations (e.g., as described in more detail elsewhere herein) while preserving identity characteristics when generating an image, which may be included in a high-quality, accurate, and realistic face reenactment video.

As indicated above, Figs. 1A-1D are provided as an example. Other examples may differ from what is described with regard to Figs. 1A-1D.

Fig. 2 is a diagram of an example environment 200 in which systems and/or methods described herein may be implemented. As shown in Fig. 2, environment 200 may include a cloud infrastructure 202. The cloud infrastructure 202 may include one or more elements 203-212, as described in more detail below. As further shown in Fig. 2, environment 200 may include an image generation system 201 (e.g., that implements an image generation model and which may correspond to the image generation system 105 and/or the image generation model as described in more detail elsewhere herein), a user device 214 (e.g., which may correspond to the user device 110), and a network 215. Devices and/or elements of environment 200 may interconnect via wired connections and/or wireless connections.

The cloud infrastructure 202 may include computing hardware 203, a resource management component 204, a host operating system (OS) 205, and/or one or more virtual computing systems 206. The cloud infrastructure 202 may execute on, for example, an Amazon Web Services platform, a Microsoft Azure platform, or a Snowflake platform. The resource management component 204 may perform virtualization (e.g., abstraction) of computing hardware 203 to create the one or more virtual computing systems 206. Using virtualization, the resource management component 204 enables a single computing device (e.g., a computer or a server) to operate like multiple computing devices, such as by creating multiple isolated virtual computing systems 206 from computing hardware 203 of the single computing device. In this way, computing hardware 203 can operate more efficiently, with lower power consumption, higher reliability, higher availability, higher utilization, greater flexibility, and lower cost than using separate computing devices.

The computing hardware 203 may include hardware and corresponding resources from one or more computing devices. For example, computing hardware 203 may include hardware from a single computing device (e.g., a single server) or from multiple computing devices (e.g., multiple servers), such as multiple computing devices in one or more data centers. As shown, computing hardware 203 may include one or more processors 207, one or more memories 208, and/or one or more networking components 209. Examples of a processor, a memory, and a networking component (e.g., a communication component) are described elsewhere herein.

The resource management component 204 may include a virtualization application (e.g., executing on hardware, such as computing hardware 203) capable of virtualizing the computing hardware 203 to start, stop, and/or manage one or more virtual computing systems 206. For example, the resource management component 204 may include a hypervisor (e.g., a bare-metal or Type 1 hypervisor, a hosted or Type 2 hypervisor, or another type of hypervisor) or a virtual machine monitor, such as when the virtual computing systems 206 are virtual machines 210. Additionally, or alternatively, the resource management component 204 may include a container manager, such as when the virtual computing systems 206 are containers 211. In some implementations, the resource management component 204 executes within and/or in coordination with the host operating system 205.

A virtual computing system 206 may include a virtual environment that enables cloud-based execution of operations and/or processes described herein using computing hardware 203. As shown, a virtual computing system 206 may include a virtual machine 210, a container 211, or a hybrid environment 212 that includes a virtual machine and a container, among other examples. A virtual computing system 206 may execute one or more applications using a file system that includes binary files, software libraries, and/or other resources required to execute applications on a guest operating system (e.g., within the virtual computing system 206) or the host operating system 205.

Although the cloud infrastructure 202 may execute within a cloud computing environment, and/or may be hosted within a cloud computing environment, in some implementations, the cloud infrastructure 202 may be partially cloud-based. For example, the cloud infrastructure 202 may include one or more devices that are not part of a cloud computing environment, which may include a standalone server or another type of computing device.

The image generation system 201 may include one or more devices capable of receiving, generating, storing, processing, providing, and/or routing information associated with enhanced image generation, as described elsewhere herein. The image generation system 201 may include a communication device and/or a computing device. For example, the image generation system 201 may include a server, such as an application server, a client server, a web server, a database server, a host server, a proxy server, a virtual server (e.g., executing on computing hardware), or a server in a cloud computing system. In some implementations, the image generation system 201 may include computing hardware used in a cloud computing environment. For example, the image generation system 201 may assist with enhanced image generation, as described in more detail elsewhere herein.

The user device 214 may include one or more devices capable of receiving, generating, storing, processing, and/or providing information associated with enhanced image generation, as described elsewhere herein. The user device 214 may include a communication device and/or a computing device. For example, the user device 214 may include a wireless communication device, a mobile phone, a user equipment, a laptop computer, a tablet computer, a desktop computer, a wearable communication device (e.g., a smart wristwatch, a pair of smart eyeglasses, a head mounted display, or a virtual reality headset), or a similar type of device.

The network 215 may include one or more wired and/or wireless networks. For example, the network 215 may include a cellular network, a public land mobile network (PLMN), a local area network (LAN), a wide area network (WAN), a private network, the Internet, and/or a combination of these or other types of networks. The network 215 enables communication among the devices of the environment 200.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the environment 200 may perform one or more functions described as being performed by another set of devices of the environment 200.

Fig. 3 is a diagram of example components of a device 300 associated with enhanced image generation. The device 300 may correspond to the image generation system 105, the user device 110, the image generation system 201, and/or the user device 214. In some implementations, the image generation system 105, the user device 110, the image generation system 201, and/or the user device 214 may include one or more devices 300 and/or one or more components of the device 300. As shown in Fig. 3, the device 300 may include a bus 310, a processor 320, a memory 330, an input component 340, an output component 350, and/or a communication component 360.

The bus 310 may include one or more components that enable wired and/or wireless communication among the components of the device 300. The bus 310 may couple together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 may include a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some implementations, the processor 320 may include one or more processors capable of being programmed to perform one or more operations or processes described elsewhere herein.

The memory 330 may include volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 may store information, one or more instructions, and/or software (e.g., one or more software applications) related to the operation of the device 300. In some implementations, the memory 330 may include one or more memories that are coupled (e.g., communicatively coupled) to one or more processors (e.g., processor 320), such as via the bus 310. Communicative coupling between a processor 320 and a memory 330 may enable the processor 320 to read and/or process information stored in the memory 330 and/or to store information in the memory 330.

The input component 340 may enable the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 may enable the device 300 to provide output, such as via a display, a speaker, and/or a light-emitting diode. The communication component 360 may enable the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a non-transitory computer-readable medium (e.g., memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

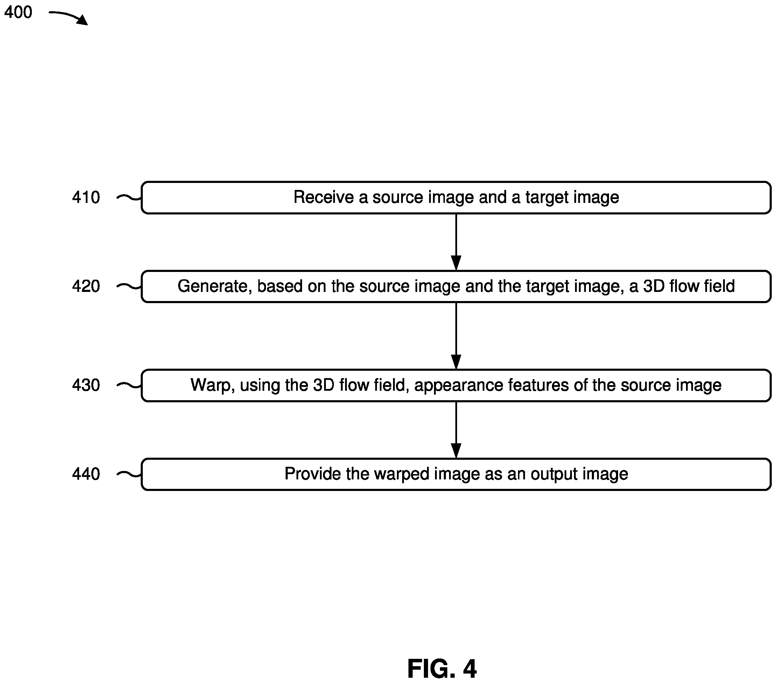

Fig. 4 is a flowchart of an example process 400 associated with enhanced image generation. In some implementations, one or more process blocks of Fig. 4 may be performed by an image generation model implemented by the image generation system 105. In some implementations, one or more process blocks of Fig. 4 may be performed by another device, or a group of devices, separate from or including the image generation model implemented by the image generation system 105, such as the user device 110. Additionally, or alternatively, one or more process blocks of Fig. 4 may be performed by one or more components of the device 300, such as the processor 320, the memory 330, the input component 340, the output component 350, and/or the communication component 360.

As shown in Fig. 4, the process 400 includes receiving a source image and a target image (block 410). For example, the image generation model (e.g., implemented by the image generation system 105) may receive a source image and a target image, as described in more detail elsewhere herein. In some implementations, the source image may include a source object (e.g., a source face and a source torso) having appearance features. The appearance features may include unique visual characteristics indicative of a visual identity of the source object. The target image may include a target object (e.g., a target face and a target torso) having a target motion (e.g., a target pose and a target expression of the target face and the target torso).

As further shown in Fig. 4, the process 400 includes generating, based on the source image and the target image, a 3D flow field (block 420). For example, the image generation model may generate, based on the appearance features and the target motion, a 3D flow field indicative of spatial transformations between the appearance features and the target motion.

As further shown in Fig. 4, the process 400 includes warping, using the 3D flow field, appearance features of the source image (block 430). For example, the image generation model may warp, using the 3D flow field, appearance features of the source image to generate a warped image including a warped object having warped appearance features that mimic the target motion and preserve the visual identity of the source object, as described in more detail elsewhere herein.

As further shown in Fig. 4, the process 400 includes providing the warped image as an output image (block 440). For example, the image generation model may provide the warped image as an output image, as described in more detail elsewhere herein.

In some implementations, the target image may be a target frame of a target video, and the output image may be an output frame of an output face reenactment video. In some implementations, the source image and the target image may be received as user inputs.

In some implementations, the process 400 may include extracting, from the source image, a 3D feature volume of the appearance features, warping, using the 3D flow field, the 3D feature volume of the appearance features to generate a warped 3D volume of the appearance features, and converting the warped 3D feature volume into the warped image.

In some implementations, the process 400 may include regularizing motion estimation of the 3D flow field using a cyclic warp loss. In some implementations, the process 400 includes refining the warped image to generate a refined warped image including a refined warped object having refined warped physical characteristic that mimic the target motion and preserve the visual identity of the source object and providing the refined warped image as the output image.

In some implementations, the source image may include a source foreground region and a source background region. The appearance features may be included in the source foreground region. The process 400 may include separating the source foreground region from the source background region, adding the source background region to the warped image, and inpainting blank spaces created via translation between the appearance features and the warped appearance features.

In some implementations, the source object may be a source individual associated with a source identity and the target object may be a target individual associated with a target identity. The source identity and the target identity are at least one of a matching identity, or a different identity.

Although Fig. 4 shows example blocks of the process 400, in some implementations, the process 400 may include additional blocks, fewer blocks, different blocks, or differently arranged blocks than those depicted in Fig. 4. Additionally, or alternatively, two or more of the blocks of the process 400 may be performed in parallel. The process 400 is an example of one process that may be performed by one or more devices described herein. These one or more devices may perform one or more other processes based on operations described herein, such as the operations described in connection with Figs. 1A-1D. Moreover, while the process 400 has been described in relation to the devices and components of the preceding figures, the process 400 can be performed using alternative, additional, or fewer devices and/or components. Thus, the process 400 is not limited to being performed with the example devices, components, hardware, and software explicitly enumerated in the preceding figures.

The foregoing disclosure provides illustration and description but is not intended to be exhaustive or to limit the implementations to the precise forms disclosed. Modifications may be made considering the above disclosure or may be acquired from practice of the implementations.

As used herein, the term "component" is intended to be broadly construed as hardware, software, and/or a combination of hardware and software. It will be apparent that systems and/or methods described herein may be implemented in different forms of hardware, software, and/or a combination of hardware and software. The hardware and/or software code described herein for implementing aspects of the disclosure should not be construed as limiting the scope of the disclosure. Thus, the operation and behavior of the systems and/or methods are described herein without reference to specific software code - it being understood that software and hardware can be used to implement the systems and/or methods based on the description herein.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination and permutation of those items, including single members. As an example, "at least one of: a, b, or c" is intended to cover a, b, c, a-b, a-c, b-c, and a-b-c, as well as any combination with multiple of the same item. As used herein, the term "and/or" used to connect items in a list refers to any combination and any permutation of those items, including single members (e.g., an individual item in the list). As an example, "a, b, and/or c" is intended to cover a, b, c, a-b, a-c, b-c, and a-b-c.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," among other examples, are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method for generating an image, the method comprising:
receiving a source image including a source object having appearance features,
wherein the appearance features include unique visual characteristics indicative of
a visual identity of the source object;
receiving a target image including a target object having a target motion;
generating, based on the appearance features and the target motion, a three-dimensional (3D) flow field indicative of spatial transformations between the appearance features and the target motion;
warping, using the 3D flow field, the appearance features to generate a warped image including a warped object having warped appearance features that mimic the target motion and preserve the visual identity of the source object; and
providing the warped image as an output image.

2. The method of claim 1, wherein the target image is a target frame of a target video, and wherein the output image is an output frame of an output face reenactment video.

3. The method of claim 1, wherein warping, using the 3D flow field, the appearance features to generate the warped image including a warped object having warped appearance features that mimic the target motion and preserve the visual identity of the source object comprises:
extracting, from the source image, a 3D feature volume of the appearance features;
warping, using the 3D flow field, the 3D feature volume of the appearance features to generate a warped 3D volume of the appearance features; and
converting the warped 3D feature volume into the warped image.

4. The method of claim 1, further comprising:
regularizing motion estimation of the 3D flow field using a cyclic warp loss.

5. The method of claim 1, further comprising:
refining the warped image to generate a refined warped image including a refined warped object having refined warped physical characteristic that mimic the target motion and preserve the visual identity of the source object; and
providing the refined warped image as the output image.

6. The method of claim 1, wherein the appearance features are included in a source foreground region of the source image,
wherein the source image includes a source background region, and
wherein the method further comprises:
separating the source foreground region from the source background region;
adding the source background region to the warped image; and
inpainting blank spaces created via translation between the appearance features and the warped appearance features.

7. The method of claim 1, wherein the source object is a source individual associated with a source identity,
wherein the target object is a target individual associated with a target identity, and
wherein the source identity and the target identity are at least one of:
a matching identity, or
a different identity.

8. An image generation system, comprising:
one or more memories; and
one or more processors, communicably coupled to the one or more memories, configured to:
receive a source image including a source object having appearance features,
wherein the appearance features include unique visual characteristics
indicative of a visual identity of the source object;
receive a target image including a target object having a target motion;
generate, based on the appearance features and the target motion, a three-dimensional (3D) flow field indicative of spatial transformations between the appearance features and the target motion;
warp, using the 3D flow field, the appearance features to generate a warped image including a warped object having warped appearance features that mimic the target motion and preserve the visual identity of the source object; and
provide the warped image as an output image.

9. The image generation system of claim 8, wherein the target image is a target frame of a target video, and
wherein the output image is an output frame of an output face reenactment video.

10. The image generation system of claim 8, wherein the one or more processors, to warp, using the 3D flow field, the appearance features to generate the warped image including a warped object having warped appearance features that mimic the target motion and preserve the visual identity of the source object, are configured to:
extract, from the source image, a 3D feature volume of the appearance features;
warp, using the 3D flow field, the 3D feature volume of the appearance features to generate a warped 3D volume of the appearance features; and
convert the warped 3D feature volume into the warped image.

11. The image generation system of claim 8, wherein the one or more processors are configured to:
regularize motion estimation of the 3D flow field using a cyclic warp loss.

12. The image generation system of claim 8, wherein the appearance features are included in a source foreground region of the source image,
wherein the source image includes a source background region, and
wherein the one or more processors are configured to:
separate the source foreground region from the source background region;
add the source background region to the warped image; and
inpaint blank spaces created via translation between the appearance features and the warped appearance features.

13. The image generation system of claim 8, wherein the one or more processors are configured to:
refine the warped image to generate a refined warped image including a refined warped object having refined warped physical characteristic that mimic the target motion and preserve the visual identity of the source object; and
provide the refined warped image as the output image.

14. The image generation system of claim 8, wherein the source object is a source individual associated with a source identity,
wherein the target object is a target individual associated with a target identity, and
wherein the source identity and the target identity are at least one of:
a matching identity, or
a different identity.

15. A non-transitory computer-readable medium storing a set of instructions, the set of instructions comprising:
one or more instructions that, when executed by one or more processors of an image generation system, cause the image generation system to:
receive a source image including a source object having appearance features,
wherein the appearance features include unique visual characteristics
indicative of a visual identity of the source object;
receive a target image including a target object having a target motion;
generate, based on the appearance features and the target motion, a three-dimensional (3D) flow field indicative of spatial transformations between the appearance features and the target motion;
warp, using the 3D flow field, the appearance features to generate a warped image including a warped object having warped appearance features that mimic the target motion and preserve the visual identity of the source object; and
provide the warped image as an output image.
